# EUROPEAN PATENT APPLICATION

(11) **EP 4 775 289 A1**
(43) Date of publication of application: **15.07.2026**
(21) Application number: 25153601.7
(22) Date of filing: 23.01.2025
(51) Int. Cl.: B01D 29/31

(54) **FILTER CARTRIDGE AND FILTER UNIT COMPRISING THE FILTER CARTRIDGE**

(30) Priority: 14.01.2025 TN 2025000008
(71) Applicant: Misfat Filtration, 1124 Mannouba (TN)
(72) Inventor: GUERMAZI, Mohamed, 1124 Mannouba (TN); BEN CHAABENE, Zahra, 1124 Mannouba (TN); ZAFFATI, Said, 1124 Mannouba (TN)
(74) Representative: Kuhnen & Wacker Patent- und Rechtsanwaltsbüro PartG mbB

(57) **Abstract**

The invention pertains to a filter cartridge comprising a filter element (2) for fitting in a filter unit (100), the filter unit (100) being of the type having a filter bowl (31) (31) and a filter head (36) characterized by a filter cage (3) (3) configured to accommodate the filter element (2). The Invention further pertains to a filter unit comprising the filter cartridge.

## Description

The invention pertains to a filter cartridge according to the preamble of claim 1 and a filter unit comprising the filter cartridge.

Filter units according to the preamble of claim 1 are for example known from EP 2 300 123 A1, EP 2 789 375 A1, or EP 3 651 873 A1. All these units comprise a filter element for fitting in a bowl of a filter unit. The filter elements are replaceable with respect to the filter bowl.

The above filter units, particularly filter elements of the above-mentioned filter units, are prone to malformation because of unskilled handling. A further disadvantage is that a filter medium, especially a paper filter medium, is prone to get contaminated with dirt and dust due to, for example, a contact with the hands of a mechanic or other environmental conditions of a repair shop before the filter element is inserted into the filter bowl.

Consequently, there is a need for an improved design of a filter cartridge of a respective filter unit.

The above defined problems are solved by a filter cartridge according to the invention comprising:
a filter element for fitting in a filter unit, the filter unit being of the type having a filter bowl and a filter head whereas
a filter cage configured to accommodate the filter element is provided.

By providing a protective cage around the filter element distortion and/or contamination of the filter element, especially a paper filter element, is minimized or at least reduced.

In a preferred embodiment, the filter cage having a plurality of connector lugs, each configured to interact with corresponding connector ribs of the filter bowl and the connector ribs and the connector lugs in an engaged position, may provide a fixation of the filter cage relative to the filter bowl in an axial direction and along a first rotational direction.

With this embodiment it is possible to use the filter cage as a means for connecting the filter cartridge with the filter bowl of a respective filter unit as well.

In a preferred embodiment the filter cage further comprises at least one spring element that is configured to get biased in a radial inward direction relative to the filter cage during an attachment of the filter cage to the filter bowl and is further configured to snap radially outwards, entering a slot of the filter bowl, thereby blocking a movement of the filter cage and the filter bowl along a second rotational direction opposite to the first rotational direction.

With such an embodiment a complete fixation along all degrees of freedom relative to the filter bowl is achieved within only one part.

According to another embodiment of the invention, the filter cage has a bottom portion along the axial direction, and the filter cage has a receiving portion at an axial distance from the bottom portion for receiving an end cap.

With this embodiment, a defined and precise positioning of the filter element relative to the filter cage is provided. Further, an upper end cap can easily be mounted - for example, glued to the filter cage.

According to another embodiment of the invention, the spring element is a bar shaped bending spring element and has a radially outwards protruding projection at one free end and further is attached to the filter cage on its other end.

This embodiment provides a simple solution for providing the spring element as being a part of a one-piece injection molded part made of resin. Due to the elasticity of a resin, for example a thermoplastic resin, the necessary spring forces in order to provide the blocking functions of the spring element can easily be achieved.

According to another embodiment of the invention, the bar shaped bending spring element extends along a circumferential direction relative to the filter element.

With this orientation and position of mounting of the bar shaped bending spring element, forces acting on the spring element during a rotational mounting movement of the filter cage relative to the filter bowl predominantly create stretching forces within the bar shaped spring element. Bending forces are minimized.

According to another embodiment of the invention, the filter cage has a net-like cage wall comprising a bar structure of multiple bars and orifices between adjacent bars.

With this design, an appropriate function of protection of the filter element is provided with a minimal use of raw material, and therefore providing an effective material usage.

According to another embodiment of the invention the filter cage comprises a hydrophobic attached to the filter cage, particularly closing the orifices and thereby separating water from the fuel.

According to another embodiment of the invention, at least some of the bars expand in an inclined direction relative to the axial direction.

With this measurement, the filter cage receives a proper strength against a rotational distortion as inclined bars are able to receive and support rotational reaction forces that may occur during a mounting of the filter cage relative to the filter bowl.

According to another embodiment of the invention, the filter cage has a plurality of regularly inwards protruding ribs configured to guide the filter element in the axial direction during mounting.

With this measurement, a rotational fixation of the filter element relative to the filter cage can be easily achieved.

According to another embodiment of the invention, the connecting lugs of the filter cage and the corresponding connector ribs of the filter bowl form a rotational bayonet-lock.

A rotational bayonet-lock is a very easy to operate kind of fixing the filter cage together with the filter element to the filter bowl.

According to another embodiment of the invention, surfaces of the connecting lugs of the filter cage and the connecting ribs are flush with respect to each other, and thereby form an engagement surface for second connector ribs which are attached to the filter head.

With this, a composite connector rib is created in an especially easy way which is useable for engaging with a counter connector of the filter head.

According to another embodiment of the invention, the filter cage as well as the end cap carry marks representing a suitable position relative to each other in a circumferential direction.

This makes it easy to control a correct mounting of the filter element relative to the filter bowl by a visual indication.

Further, the problems regarding the filter unit are sorted by a filter unit comprising a filter cartridge according to the invention.

The invention will be described in more detail based on the following figures:
- Figure 1:: an isometric view of a filter cartridge according to the invention;
- Figure 2:: an isometric view of the filter cartridge of figure 1 without an end cap;
- Figure 3:: an isometric view of the filter cage of the filter cartridge of figure 1;
- Figure 4:: an isometric view of the filter cartridge of figure 1 inserted into a filter bowl of a filter unit;
- figure 5:: a longitudinal section across along a central axis of a filter unit of the invention comprising a filter cartridge of the invention;

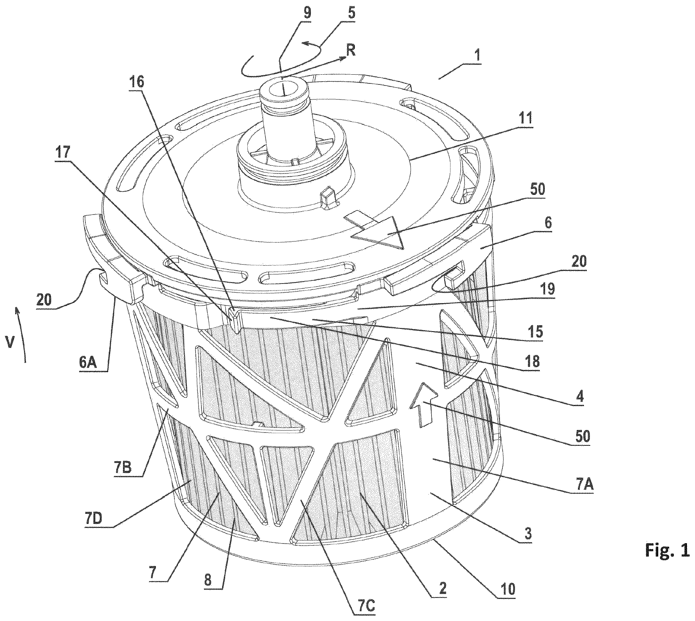

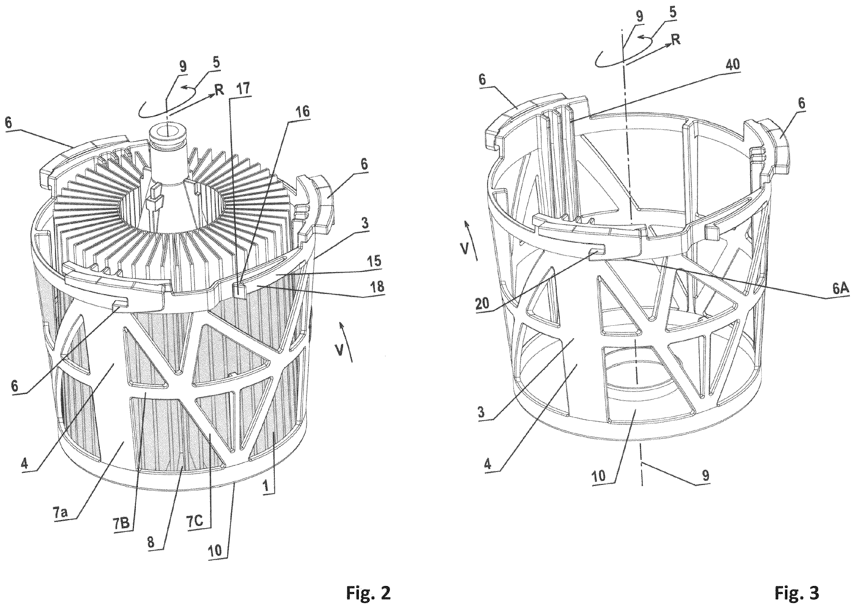

A filter cartridge 1 of the invention will be described with respect to figures 1 to 3.

The filter cartridge 1 has a filter element to which, for example, is a paper filter element. The filter element to is accommodated by filter cage 3. The filter cage 3 has a cage wall 4 which circumferentially surrounds the filter element 2. On an upper end of the filter cage 3, distributed along a circumferential direction 5, the filter cage 3 provides a plurality of connecting lugs 6, particularly three connecting lugs 6.

The cage wall 4 comprises a bar structure of multiple bars 7A and orifices 8. Besides the bars 7A, which are oriented along their longitudinal direction in parallel to a central axis 9 of the filter cartridge 1, there are circumferential bars 7B which are extending along their longitudinal directions in the circumferential direction 5. Further, there are inclined bars 7C which longitudinal extension is inclined at a distance relative to the central axis 9.

The bars 7A, 7A, 7B define the orifices 8 surrounded by the bars 7A, 7B, 7C, that in one alternative are open. In a second alternative these orifices 8 are closed by a hydrophobic 7D. The hydrophobic 7D is a hydrophobic fabric printed on the filter cage 3 and filling the orifices 8 between the bars 7 to separate water from fuel.

When viewed in a vertical direction V, the filter cartridge comprises a bottom portion 10 at a vertical lower end. Opposite to the bottom portion 10 at a vertical upper end, the filter cartridge 1 comprises an end cap 11 which is fixed to an upper end of the filter cage 3. The fixation of the end cap 11 to the filter cage 3 can be achieved by gluing, for example. In the area of the vertical upper end, approximately at the same vertical position as the connector locks are located, a spring element 15, which is formed to be a bar like spring element 15, is provided. The spring element 15 has a free end 16 which carries a locking protrusion 17, the locking protrusion 17 projecting readily outwards from a bar element 18 of the bar like spring element 15. With a second end 19 of the bar like spring element 15, it is attached to the filter cage 3 by way of a one-piece-design, for example, being an injection molded part.

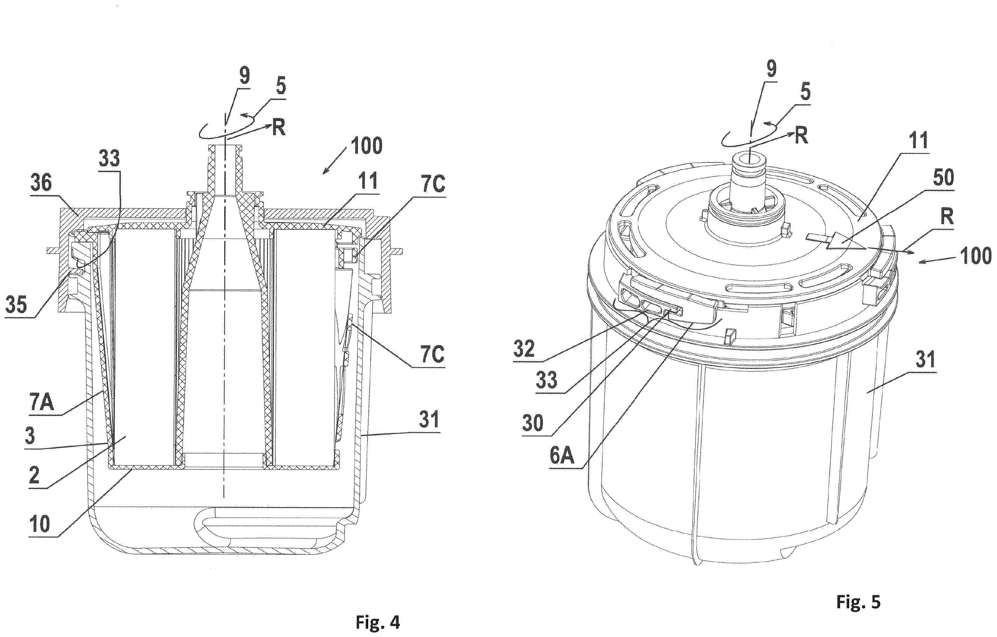

The connection lugs 6 each have a hook portion 20 which is open in a clockwise orientation of the circumferential direction 5. The hook portions 20 are intended to get engaged with corresponding connection ribs 30, forming a counter connection element which is part of a filter bowl 31 of a filter unit 100 of the invention (see figs. 4 and 5). As a result, the connection lugs 6 of the filter cage 3 and the corresponding connection ribs 30 of the filter bowl 31 form a first rotational bayonet-lock which is capable to connect the filter cartridge 1 with the filter bowl 31.

Further, the connection lugs 6 of the filter cage 3 have an inclined lower surface seeks, a switch, and an engaged status of the filter cartridge 1 sitting in the filter bowl 31 is flush with a lower surface 32 of the corresponding connection ribs 30, thereby forming a downwards ramp, like - when seen in a clockwise circumferential direction - vertically descending combined surface 33, which provides an engagement surface for corresponding second connection ribs 35 of a filter head 36 of the filter unit 100. The combined surfaces 33 together with the second connection ribs 35 form a second rotational bayonet-lock between the filter head 36 and the filter bowl 31.

At an inner side of the cage wall 4, particularly along the vertical bars 7A of the cage wall 4, a plurality of vertical ribs 40 are provided which help to stiffen the filter cage 3 against buckling in a vertical direction and also may provide guide rails during inserting the filter element 2 into the filter cage 3.

The endcap 11 as well as the cage wall 4 carry visual marks 50 such as arrows which, when pointing to each other, indicate a filter cage 3 in the sacrum further in the circumferential direction 5.

### List of reference numbers

- 1: filter cartridge
- 2: filter element
- 3: filter cage
- 4: cage wall
- 5: circumferential direction
- 6: connector lug
- 6A: inclined surface
- 7: bars
- 7A: vertical bars
- 7B: circumferential bars
- 7C: inclined bars
- 7D: hydrophobic
- 8: orifice
- 9: central axis
- 10: bottom portion
- 11: end cap

- 15: spring element
- 16: free end
- 17: protrusion
- 18: bar
- 19: second end
- 20: hook portion
- 30: connection rib
- 31: filter bowl
- 32: lower surface
- 33: combined surface
- 35: second connector rib
- 36: filter head
- 40: vertical ribs
- 50: mark

- 100: filter unit

## Claims

1. Filter cartridge comprising:
a filter element (2) for fitting in a filter unit (100), the filter unit (100) being of the type having a filter bowl (31) (31) and a filter head (36)
**characterized by**
a filter cage (3) (3) configured to accommodate the filter element (2).

2. Filter cartridge according to claim 1, **characterized in that** the filter cage (3) has a plurality of connector lugs (6) each configured to interact with corresponding connector ribs (30) of the filter bowl (31) and the connector ribs (30) and the connector lugs (6) in an engaged position may provide a fixation of the filter cage (3) relative to the filter bowl (31) in an axial direction and along a first rotational direction.

3. Filter cartridge according to claim 1 or 2, **characterized in that** the filter cage (3) further comprises at least one spring element (15) that is configured to get biased in a radial inward direction relative to the filter cage (3) during an attachment of the filter cage (3) to the filter bowl (31) and may further be configured to snap radially outwards entering a slot of the filter bowl (31), thereby blocking a movement of the filter cage (3) and the filter bowl (31) along a second rotational direction opposite to the first rotational direction.

4. Filter cartridge according to claim 1, **characterized in that** along the axial direction the filter cage (3) has a bottom portion (10) and at an axial distance from the bottom portion (10) the filter cage (3) has a receiving portion for receiving an end cap (11).

5. Filter cartridge according to one of the preceding claims, **characterized in that** the spring element (15) is a bar shaped bending spring element (15) and has a radially outwards protruding projection at one free end (16) and further is attached to the filter cage (3) on its other end.

6. Filter cartridge according to one of the preceding claims, **characterized in that** the bar shaped bending spring element (15) extends along a circumferential direction (5) relative to the filter element (2).

7. Filter cartridge according to one of the preceding claims, **characterized in that** the filter cage (3) has a net-like cage wall (4) comprising a bar structure of multiple bars (7A,7B,7C) and orifices between adjacent bars (7A,7B,7C).

8. Filter cartridge according to one of the preceding claims, **characterized in that** the filter cage (3) comprises a hydrophobic (7D) attached to the filter cage (3).

9. Filter cartridge according to one of the preceding claims, **characterized in that** at least some of the bars (7A,7B,7C) expand in an inclined direction relative to the axial direction.

10. Filter cartridge according to one of the preceding claims, **characterized in that** the filter cage (3) has a plurality of regularly inwards protruding ribs (40) configured to guide the filter element (2) in the axial direction during mounting.

11. Filter cartridge according to one of the preceding claims, **characterized in that** the connecting locks of the filter cage (3) and the corresponding connector ribs (30) of the filter bowl (31) form a rotational bayonet-lock.

12. Filter cartridge according to one of the preceding claims, **characterized in that** lower surfaces of the connecting locks and the connecting ribs are flush and form an engagement surface for second connector ribs (35) which are attached to the filter head (36).

13. Filter cartridge according to one of the preceding claims, **characterized in that** the filter cage (3) as well as the end cap (11) carry marks (50) representing a suitable position relative to each other in a circumferential direction (5).

14. Filter unit (100) comprising a filter cartridge (1) according to one of the preceding claims.
